(19)

Europäisches
Patentamt
European
Patent Office
Office européen
des brevets

(11) **EP 3 046 073 A1**

(12) **EUROPEAN PATENT APPLICATION**

(43) Date of publication:
**20.07.2016 Bulletin 2016/29**

(51) Int Cl.:
*G06T 5/20* (2006.01)          *G06T 5/50* (2006.01)
*G06T 7/00* (2006.01)

(21) Application number: **15305025.7**

(22) Date of filing: **14.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Hoerentrup, Jobst**
  **30974 Wennigsen (DE)**
• **Schlosser, Markus**
  **76137 Karlsruhe (DE)**

(74) Representative: **Huchet, Anne et al**
**Technicolor**
**1, rue Jeanne d'Arc**
**92443 Issy-les-Moulineaux (FR)**

(54) **Method and apparatus for color correction in an alpha matting process**

(57)    A method for color correction in an alpha matting process for an image and an apparatus (20) configured to perform the method are described. The apparatus (20) comprises a parameter retrieving unit 23 that retrieves 10 an initial image carrying unmixed colors, e.g. from a color estimator 24 or by resorting to a previously generated initial image. A guided image filter 25 then filters 11 the initial image using the image as a guiding image.

**Fig. 10**

EP 3 046 073 A1

## Description

## FIELD

The present principles relate to a method and an apparatus for color correction in an alpha matting process. In particular, the present principles relate to a method and an apparatus for color correction in an alpha matting process via structure transfer.

## BACKGROUND

Alpha matting refers to the problem of softly extracting a foreground object out of an image. In contrast to binary segmentation, where each pixel is either classified as fully foreground or background, alpha matting recognizes the existence of "mixed" pixels. A major reason for such mixed pixels is the limited resolution of cameras, where light from the foreground object and the background contribute to the incoming light of a CCD element. Other reasons can be motion-blur and (semi-) transparencies in the object itself. Alpha matting and thus the soft extraction of objects from a still image or a video sequence is a fundamental problem in computer vision in general and movie post-production in particular.

The mixing coefficient is typically called "alpha". It is defined to be between 0 and 1, i.e., 0% and 100%, and describes the fraction to which light from the foreground object contributed to the incoming light on an image sensor element, i.e. to an image pixel. An alpha matting algorithm tries to estimate this alpha coefficient, as well as the unmixed foreground and background colors. Each (unmixed) color is defined by three parameters, e.g. R, G, and B values in case of the RGB color space. Alpha matting hence needs to determine seven unknowns from only three knowns. The problem is thus illposed and requires additional constraints. One common constraint is a trimap, which is provided along with the input image or sequences thereof. The trimap indicates three different types of regions: known foreground, known background, and an unknown region where the foreground potentially mixes with the background. The task of the alpha matting algorithm is to estimate the alpha value for all pixels in the unknown region.

In [1] a good overview is provided over the state of the art of alpha matting. All top performing methods conduct an initial per-pixel estimation of the alpha value, the foreground color, and the background color. In a second step, the alpha matte is usually refined to reduce noise and to align the initial alpha matte to the structures, i.e. color gradients, visible in the image.

A lot of research has been spent on the refinement of the alpha matte [2,6,7]. However, as mentioned above, the final goal of alpha matting is to softly extract a foreground object out of an image. On top of an alpha value, this includes the (unmixed) foreground color for each pixel.

Today there is only very little research on the refinement of foreground / background colors.

Given an alpha matte, Levin et al. [2] assume that the foreground F and the background B are smooth, especially at matte edges, and reconstruct F and $B$ so that alpha, F and $B$ well fit the compositing equation $I = F\alpha + (1 - \alpha)B$, where I denotes the observed color in the image. Although this method provides state of the art quality, the reconstruction requires solving a large sparse system of linear equations for each color channel. As such it is memory and computation intensive.

Köhler et al. [3] add a regularization term to Levin's approach, which is useful for the special case of motion blur. Therefore, this method is even more memory and computation intensive than Levin's method.

## SUMMARY

It is an object to propose an improved solution for color correction in an alpha matting process, which achieves improved estimated foreground and background colors.

According to one embodiment, a method for color correction in an alpha matting process comprises:

- retrieving an initial image carrying unmixed colors; and
- filtering the initial image with a guided image filter using the image as a guiding image.

Accordingly, in one embodiment an apparatus configured to correct colors in an alpha matting process comprises:

- a parameter retrieving unit configured to retrieve an initial image carrying unmixed colors; and
- a guided image filter configured to filter the initial image using the image as a guiding image.

In another embodiment, an apparatus configured to correct colors in an alpha matting process comprises a processing device and a memory device having stored therein instructions, which, when executed by the processing device, cause the apparatus to:

- retrieve an initial image carrying unmixed colors; and
- filter the initial image with a guided image filter using the image as a guiding image.

Also, a computer readable storage medium has stored therein instructions enabling color correction in an alpha matting process, which when executed by a computer, cause the computer to:

- retrieve an initial image carrying unmixed colors; and
- filter the initial image with a guided image filter using the image as a guiding image.

In one embodiment, the initial color estimates are retrieved by:

- retrieving a trimap for the image; and
- computing a filter output only for pixels in the unknown region of the trimap.

In alpha matting, a color sampling stage provides an initial estimate for both the foreground color and the background color for each pixel in the unknown region of the trimap. As a result, one (partial) image for the foreground object and one (partial) image for the background is obtained. The present solution allows improving the estimated colors in the foreground image and the background image. To ease understanding, the description is mostly limited to the case of improving the colors of the foreground image. The background image may be processed in a corresponding way.

The present approach is inspired by the observation that many pixels in the unknown region are unmixed foreground pixels. For these pixels, the original image carries the right colors.

A very simple approach is to transfer to colors of the original image to the foreground through a simple pixel-by-pixel copy operation, such that the foreground is finally a copy of the original image. This results in fully accurate colors for the large set of unmixed foreground pixels. Such a one-to-one color transfer is, however, not desirable for the smaller set of mixed pixels. Depending on their alpha value, their colors may carry a considerable portion of the background color. Copying their colors leads to visible artifacts around the foreground contour when the extracted foreground is finally composed on a new background, especially when the transition region gets broader, or when the object contains large semi-transparent regions. The present approach aims at reducing these color artifacts. The color estimates provided by an initial sampling stage should help this task.

In [4] a method for correcting estimated foreground colors is disclosed. When alpha has been estimated as one, the approach assigns the pixel's observed color in the original image to the associated pixel in the foreground image. It also takes initial color estimates into account. Although the approach fulfills the two goals formulated above, its per-pixel approach is sensitive to errors in the alpha matte. For example, when the alpha value of a foreground pixel has been underestimated to some value smaller than its true value of one, the corrected foreground color will not be identical to the color observed in the image as desired. Such issues are overcome by the usage of an image filter that considers a larger neighborhood around a pixel.

In contrast to most other image processing filters, the output of the Guided Image Filter [7,8] is not a direct function of the filter input, but of a third image, the guiding image. In the following a clear distinction needs to be made between the "filter input", which is the image containing the estimated and known foreground colors, and the "original image", which will serve as the guiding image. For each input pixel to be filtered, an individual linear transformation function is computed. The function parameters are learnt by minimizing the squared error between the filter input and the filter output using linear regression. The transformation is finally used to turn the pixel's color in the guiding image, which is notably not the filter input, into the filter output. The question is how to configure the filter such that (near) one-to-one transformations transfer the colors of unmixed foreground pixels (more or less) unaltered to the foreground image, while transformations associated to mixed pixels turn their mixed colors in the guiding image into colors similar to the initial foreground color estimates. Note that the initial color estimates of which advantage shall be taken are considered in the learning stage of the Guided Image Filter. The linear models are computed such that for a local window, the squared difference between the filter output and the filter input is minimized.

The color transfer implies that the filter is configured to avoid smoothing. This is remarkable as the Guided Image Filter is widely regarded as an edge-preserving smoothing filter. The present approach foremost tries to take advantage of the filter's so-called "structure transfer" capability, which refers to the filter's capability of transforming colors in the guiding image into the filter output.

The present approach can beneficially be combined with the color correction method disclosed in [4] to pre-correct the input foreground colors. The solution not only outperforms state of the art approaches in terms of output quality, but also in terms of computational speed.

Typically an initial sampling stage provides some colors taken from the nearby foreground for the background pixels in the foreground image. In general however, their estimates are meaningless, so their consideration may be questionable. Therefore, in one embodiment of the present solution an additional weight is assigned to each pixel and a Confidence-Aware Guided Image Filter is used for the filtering. For example, an estimated alpha value of a pixel is used as its weight. Alternatively, a products of an estimated alpha value of a pixel and a confidence assigned to the estimated alpha value is used as its weight. The meaningless input foreground colors of unmixed background pixels then have no influence on the results. Further, the higher the alpha value of a pixel, the higher is its influence on the linear model.

In one embodiment the image is split into separate image channels. Each channel is then processed individually. The Guided Image Filter tries to establish a linear relationship between the colors observed in the guiding image and the initial color estimates, which are generally described by three values. At present the Guided Image Filter is limited to filtering single-channel input. Therefore, the image is split into its color channels.

In one embodiment, the guided image filter assumes a color guiding image and established 4D linear models. Two versions of the Guided Image Filter exist, the monochrome version and the color version. Though the monochrome version of the Guided Image Filter is usable for the present approach, better results are achieved with the color version of the Guided Image Filter, which establishes more powerful 4D linear models.

Our proposed solution clearly improves upon the input foreground colors. It is significantly faster than the current state of the art, while being able to exceed its quality. In particular, the approach avoids color artifacts at the transition region between the foreground and the background. Compared to the state of the art, the method is not only better suited for consumer devices with comparably small CPU power and small amounts of memory, but also better suited for processing of high resolution content in post-production.

## BRIEF DESCRIPTION OF THE DRAWINGS

Fig. 1    shows a portion of a foreground-background transition, the associated ground-truth alpha matte, and the initial foreground colors;

Fig. 2    illustrates an Impact of a few (unmixed) background pixels on a 2D linear model;

Fig. 3    shows MSE errors of the proposed method and alternatives for different filter kernel radiuses using ground-truth alpha values as input;

Fig. 4    shows MSE errors of the proposed method and alternatives for different filter kernel radiuses using estimated alpha values as input;

Fig. 5    depicts visual comparisons of results obtained for a first image region;

Fig. 6    depicts visual comparisons of results obtained for a second image region;

Fig. 7    depicts visual comparisons of results obtained for a third image region;

Fig. 8    shows portions of foregrounds not multiplied by alpha;

Fig. 9    compares processing times of the different methods for different kernel radiuses;

Fig. 10   schematically illustrates an embodiment of a method for color correction in an alpha matting process for an image;

Fig. 11   schematically depicts one embodiment of an apparatus configured to perform a method according to Fig. 10; and

Fig. 12   schematically illustrates another embodiment of an apparatus configured to perform a method according to Fig. 10.

## DETAILED DESCRIPTION OF PREFERED EMBODIMENTS

For a better understanding the proposed solution shall now be explained in more detail in the following description with reference to the figures. It is understood that the proposed solution is not limited to this exemplary embodiment and that specified features can also expediently be combined and/or modified without departing from the scope of the present principles.

The present approach proposes to improve the initial foreground colors by a Guided Image Filter [5], preferably a Confidence-Aware Guided Image Filter [6]. The filter has proven useful for a number of applications, including the refinement of a noisy alpha matte. Notably, its 4D linear model that was first introduced in [2] allows a local linear mix of two colors for both the foreground and the background. At its core, it assumes that the filter output of a pixel can be derived from a 4D linear model of the observed colors in a small surrounding window. The parameters of this 4D linear model are learnt by minimizing the squared error between the filter input and the filter output using linear regression. Once the 4D linear model has been established, a pixel's color observed in the guiding image is transformed into the filter output value. As already mentioned, the transformation of colors observed in the guiding image is rather unique to the Guided Image Filter. Most image processing filters linearly transform the filter input, e.g. by averaging the colors in the filter input in a local neighborhood.

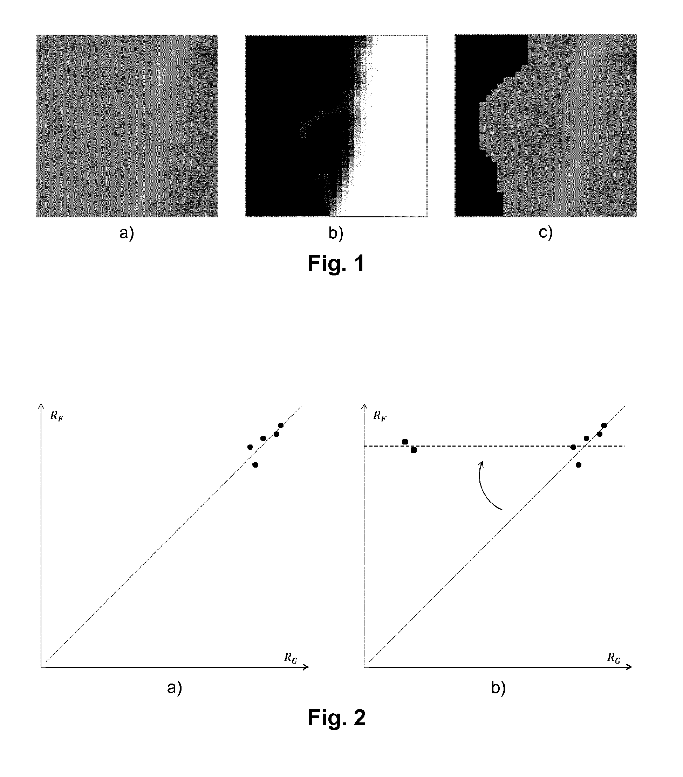

Fig. 1a) shows an example of a transition region, where the foreground mixes with the background. For the unmixed ochre pixels, alpha should be one, zero for the gray-blue pixels, and something between zero and one for the pixels in the transition region. This is shown by the alpha matte in Fig. 1b). Fig. 1c) shows the initial foreground color estimates as provided by an initial estimation stage. Pixels in the known foreground carry the color observed in the image, and pixels in the known background do not carry any foreground color (indicated by black pixels). For each pixel in the unknown region, a foreground color has been estimated.

According to the present solution the Guided Image Filter tries to establish a linear relationship between the colors observed in the guiding image and the foreground colors. Unfortunately, a (foreground) color is described by three values, in the present case an RGB tuple, but the Guided Image Filter is limited to filtering single-channel input. Therefore, the foreground image is split into its three color channels, e.g. R, G and B, and each channel is processed individually. Two versions of the Guided Image Filter exist: The monochrome version assumes a monochrome guiding image and establishes 2D linear models, while the color version assumes a color guide and establishes 4D linear models. One aspect of the present solution is to use the color version of the Guided Image Filter with the original image as the guide.

An alternative approach uses only a single channel of the guiding image, e.g. for accelerating the computations. For example, only the red color channel is used when filtering the red channel of the foreground image. This implies using the monochrome version of the Guided Image Filter, which internally establishes 2D linear models, as illustrated by the example in Fig. 2. The horizontal axis represents the red channel values in the guiding image and the vertical axis the red channel values in the filter input and output. Each pixel is represented as a dot in the diagram. As can be seen from Fig. 2a), when a local filter window covers foreground pixels only, because the color channel values in the foreground image are very similar to the color channel values in the guiding image (depending on the quality of the initial estimates), the associated local model approaches a one-to-one (identity) linear model. This is illustrated by the angle bisector of the two axes. In such a case, since the filter output at a pixel is identical to the pixel's value in the guiding image, the filter behavior is as desired.

However, when a local window starts to cover only a few nearby background pixels, whose color channel values in the guiding image are in general quite different from the others, these have a significant impact on the linear regression. An example is shown in Fig. 2b). Two (unmixed) background pixels are marked by square dots. The two pixels strongly pull the model towards a horizontal line. Such a model effectively averages the color channel values present in the input foreground image. This averaging effect is typically simply too strong for pixels that are close to the object edge but still belong to the foreground region.

Finally, even though an initial sampling stage usually assigns the background pixels some foreground colors taken from the nearby known foreground in practice, as for example shown in Fig. 1c) and assumed in Fig. 2b), their estimates are in general meaningless, because there is simply no foreground at the pixel. Therefore, such an approach is not robust.

To increase robustness, the influence of the background pixels can be decreased by using the Confidence-Aware Guided Image Filter and assigning a relatively low weight to the background pixels. The lower the weights, the lower their influence on the regression line, and the stronger this pushes the model back towards the original one-to-one model. Obviously, configuring the Guided Image Filter in such a way also results in (near) one-to-one models for mixed pixels. However, this approach tends to produce the same undesired color artifacts as when using the original image as the foreground.

As a conclusion, though the monochrome version of the Guided Image Filter is usable for the present approach, better results are achieved with a color version of the Guided Image Filter that establishes more powerful 4D linear models. Roughly, such a 4D linear model can be constant when moving along a set of colors that lie on a line in color space, and linearly changing when moving along another direction. Compared to the simple 2D linear models of the monochrome version, the 4D linear model can better adjust to the initial foreground color estimates.

As mentioned above, in practice, an initial sampling stage provides some colors taken from the nearby foreground for the background pixels in the foreground image. In general however, their estimates are meaningless, so their consideration may be questionable. Therefore, in one embodiment of the present solution an additional weight is assigned to each pixel and the Confidence-Aware Guided Image Filter is used for the filtering. For example, the alpha value of a pixel is used as its weight. The meaningless input foreground colors of unmixed background pixels then have no influence on the results. Further, the higher the alpha value of a pixel, the higher is its influence on the linear model. This corresponds to the assumption that the reliability of the initial foreground color estimate raises with an increasing alpha value. Note that, as described above, when using the monochrome version of the filter, this weighting scheme tends to transfer mixed colors into the foreground image. This effect is much weaker with the more powerful 4D linear models established by the color version of the filter.

To show its performance for improving foreground colors, the challenging alpha matting benchmark training data set from [1] are used, for which ground-truth alpha mattes and foreground colors are available. The sampling stage of Global Matting [8] is used to estimate the initial colors F and B. The proposed solution is compared with four others: In the diagrams, "RAW" is the error of the input foreground colors, "RAW+" the slightly improved foreground, where the estimated foreground color for pixels deemed fully foreground ($\alpha = 1$) are corrected to the color observed in the image as

$$F' = \left\{ \begin{array}{l} I \text{ if } \alpha = 1 \\ F \text{ otherwise} \end{array} \right.,$$

"COR" represents the color correction method disclosed in [4], "LV" denotes Levin's method [2] for reconstructing the foreground, and finally "CGF" represents the present filtering method. It is envisioned that in practice the proposed solution is combined with the color correction described in [4]. In principle, since the correction is very light-weight, it can be applied before the filtering, afterwards, or both.

The Mean Square Error (MSE) weighted by alpha is used as the error metric. It is computed as follows:

$$MSE = \frac{1}{|U|} \sum_{i \in U} \alpha_i \cdot |F_i - G_i|^2,$$

where U is the set of pixels in the unknown region, $|U|$ the number of pixels therein, index i denotes a pixel, $\alpha_i$ its ground-truth alpha value, $F_i$ its corrected foreground color (as provided by the different methods), and $G_i$ its ground-truth foreground color. The color differences are weighted by alpha. The smaller an alpha value is, the smaller is the amount of light from the foreground object that has hit the sensor element, and the less precise is the estimate. Similarly, the calculated foreground colors will also be multiplied with alpha for the final compositing so that errors will be less visible for smaller alpha values. In the extreme case of an alpha value of 0, there is no foreground at the pixel at all, so the estimated foreground color is meaningless and should have no impact on the error.

The errors in terms of SAD (Sum of Absolute Differences) weighted by alpha have been omitted, since the diagrams often show a similar trend, and because the MSE and SAD numbers are generally considered with some care. It is known that their correlation with the subjective quality is not too high [7]. Results for a visual comparison are provided further below. As already mentioned, since it is merely intended to transfer unmixed foreground colors from the input (guiding) image to the foreground under maintenance of details, the smoothing parameter $\varepsilon$ of the Guided Image Filter is set to a small value of 1e-5.

As described above, alpha values are used as weights for filtering the foreground. In the first set of experiments, the ground-truth alpha values are used as the weights for the Confidence-Aware Guided Image Filter.

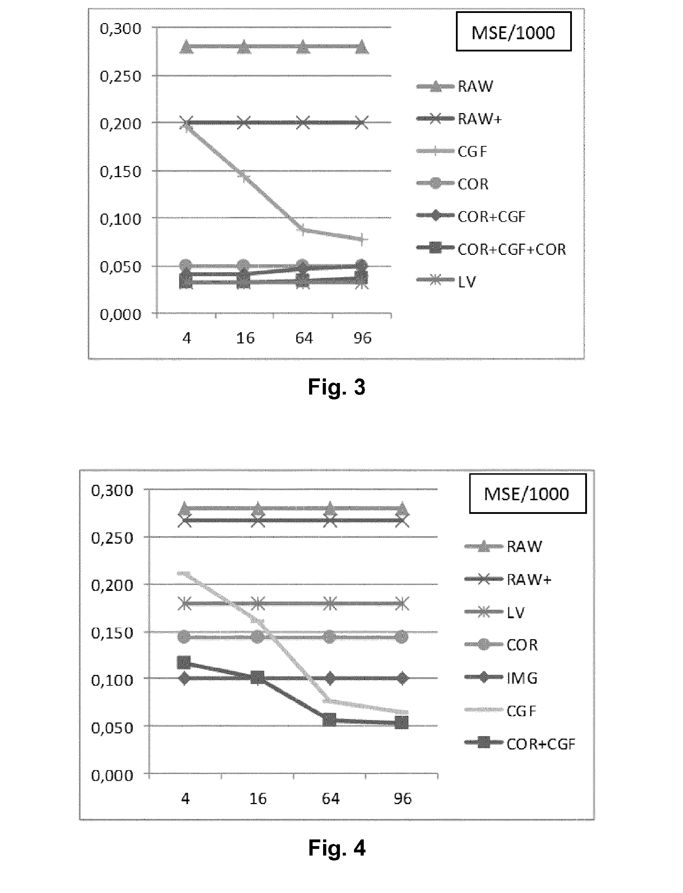

Fig. 3 compares the MSE errors of the results for different filter kernel radiuses with alternative methods. Since the alternative methods are independent of any filter kernel size, their plots are horizontal lines. Also results with color pre-correction ("COR+CGF" plot) as well as pre- and post-correction ("COR+CGF+COR" plot) were generated. Levin's method produces state of the art results. Without any pre- or post-correction, the present approach clearly improves upon the input colors with an increasing filter kernel radius, but can neither reach the level of quality obtained from Levin's method, nor the level obtained from applying the color correction method in [4] alone. This changes with the color pre- and post-correction enabled, where the proposed method is able to meet the level of quality obtained by Levin's method. The output quality of the present method changes only little with a varying filter kernel radius. The best results are obtained from a kernel radius of 16. More details on computational speed can be found further below.

In the second set of experiments estimated alpha values are used as the weights for the Confidence-Aware Guided Image filter. They were generated by the Global Matting algorithm, and refined using the Matting Laplacian [2]. Usage of these mattes is a more realistic scenario, since the ground-truth mattes as used in the previous experiments are usually not available. On the other hand, the final results are also influenced by false estimates in the mattes, since the filter weights are derived therefrom.

Fig. 4 compares the MSE errors of the results for different filter kernel radiuses with alternative methods. Also generated were results with the color correction method is [4] applied before the filtering. In the diagrams, the corresponding results are marked as "COR+CGF".

The use of the original image as the foreground ("IMG" plot) produces numerically good results. However, as already mentioned, and as shown further below, the results exhibit annoying color artifacts at the foreground contours. The proposed "CGF" method without color pre-correction outperforms Levin's method with a large enough kernel. Note that a big advantage of the Guided Image Filter is that the required computational effort is independent of the chosen filter kernel size, so there is nothing that prevents usage of a large kernel. Furthermore, it also outperforms the color correction method of [4] taken alone ("COR" method in the diagram). Note that in the previous experiments where the ground-truth mattes were used, the correction method of [4] produced better results, see Fig. 3. Obviously, as mentioned above, the present method is less sensitive to errors in the alpha matte. The "CGF" method is advantageously combined with the color correction of [4] for pre-correcting the colors. This improves the results over the whole range of tested kernel sizes. It has been found that a final post-correction of the colors does not further improve the results, as opposed to using the ground-truth mattes, see Fig. 3. A potential gain is obviously compensated by inappropriate corrections caused by errors in the alpha estimates.

A comparison of the results obtained using the ground truth alpha mattes with the ones obtained using estimated mattes shows that the present approach is more robust to errors in the alpha mattes than Levin's. For the latter, the MSE raises by a factor of about 5.5. For the present method including the pre-correction, depending on the filter kernel radius, the raise is between 2.9 (r=4) and 1.1 (r=96) only. For Levin's approach, the gradient in the alpha matte controls the degree of smoothing. It is computed between neighboring pixels. A single false alpha estimate can therefore easily lead to a false gradient in the matte, which in turn translates into an over-smoothed foreground. In contrast, when computing the output for a pixel, the present filtering approach considers the alpha values of a larger neighborhood around the pixel, especially for the larger kernel sizes. The impact of a single false estimate is therefore limited.

Also visual comparisons of the results have been conducted, because as mentioned above, the MSE numbers generally need to be considered with some care.

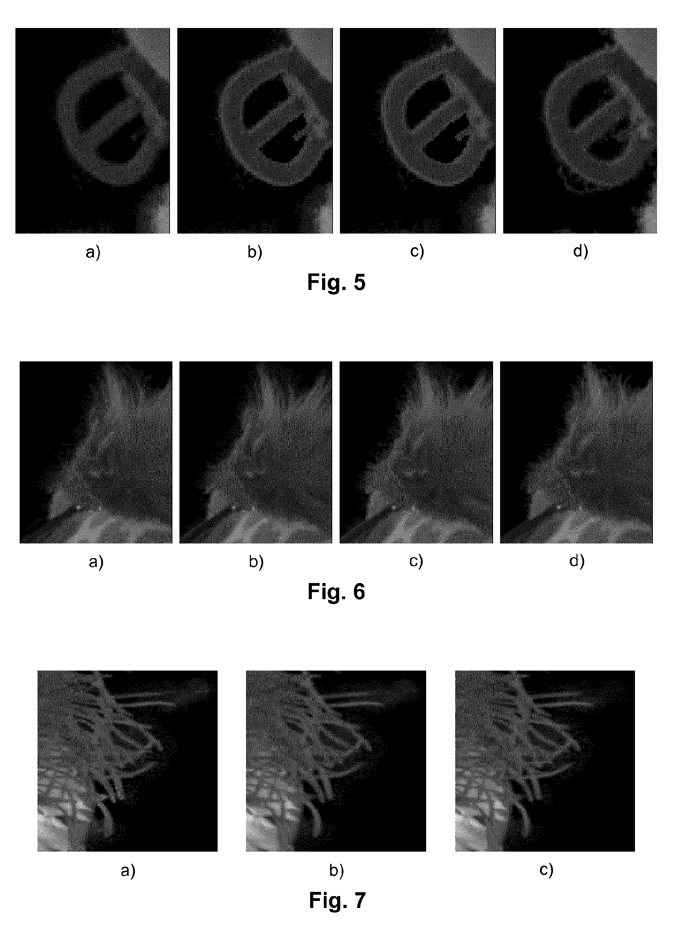

Figs. 5-7 show the final foreground images multiplied by alpha. Sub-images a) are based on Levin's foreground, sub-images b) on the foreground as proposed herein, sub-images c) on original image as the foreground, and sub-images d) on the ground-truth. In most regions of all the benchmark test cases, the results are indistinguishable from Levin's. As described in [4], her method sometimes produces color artifacts at the border between the foreground and the background. Fig. 5a) and Fig. 6a) provide two such examples. Such color artifacts are not observed in the results obtained with the present approach. However, as mentioned above, the present approach may have a tendency to transfer mixed colors into the foreground. Fig. 5 shows that some effect might be there, but that it is limited. In any case, as shown particularly by Fig. 6, it is much weaker compared to when the image is used as the foreground

Fig. 7 show portions of a foreground refined by the color correction method described in [4] (Fig. 7a)), a foreground refined by the current method (Fig. 7b)), and a foreground reconstructed by Levin's method (Fig. 7c)). Each is multiplied by the same estimated alpha matte that was used to refine/reconstruct the foregrounds. Compared to the results from [4] (color correction only), the results achieved with the present approach are smoother. Levin's method misses to reconstruct the outer portion of the top strand. The result obtained with the present approach still exhibits some more noise, and the edges of the strands look a little more light-colored. This is likely caused by poor initial color estimates.

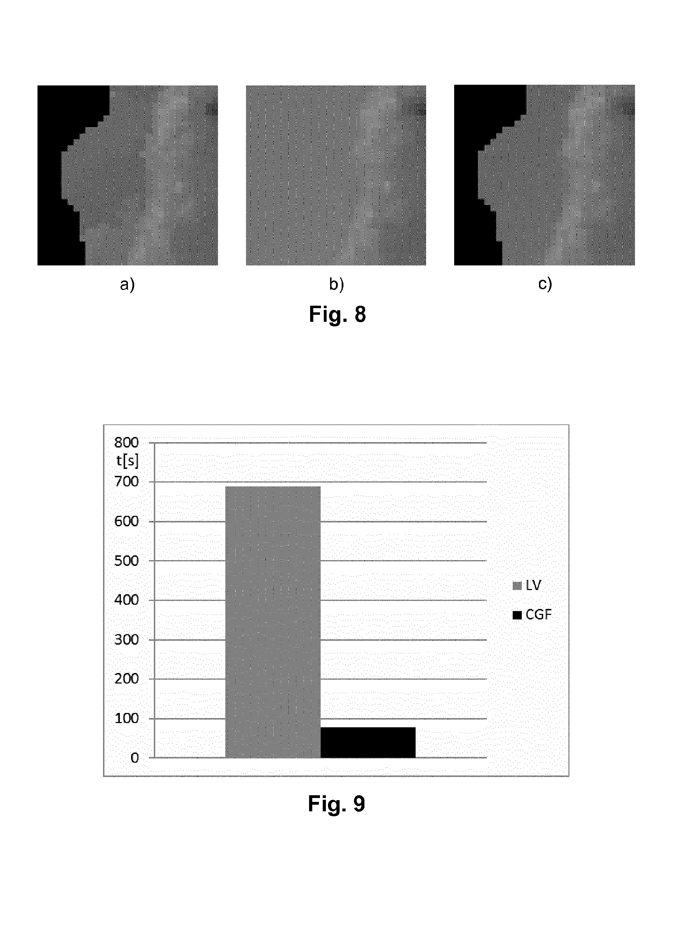

To better illustrate the effect of the proposed approach, Fig. 8 shows portions of foregrounds not multiplied by alpha. The colors of unmixed foreground pixels have been transferred from the original image (Fig. 8b)) to the output foreground (Fig. 8c)). Compared to the unrefined foreground (Fig. 8a)), they have improved. The background color has been transformed into a more foreground color-like hue. This effect is important. It reduces the color contours expected to be observable in the transition region when using the original image as the foreground in a following alpha composition step.

Fig. 9 compares the processing times of the different methods for different kernel radiuses (where applicable), accumulated over the complete set of images and trimaps in the training data set of [1]. C++ implementations of the different methods are used, running single-threaded on an Intel Core i7-3770 CPU running at 3.4 GHz.

Levin's method does not know any filter kernel size, and for the present method, the required computational time is independent of one. Due to its global optimization scheme, Levin's method is computationally expensive and takes about 700 seconds. In contrast, the proposed method takes only about 80 seconds. In addition, Levin's method optimizes a global cost, which is not only compute intensive, but also memory intensive. The proposed local filtering approach requires far less memory.

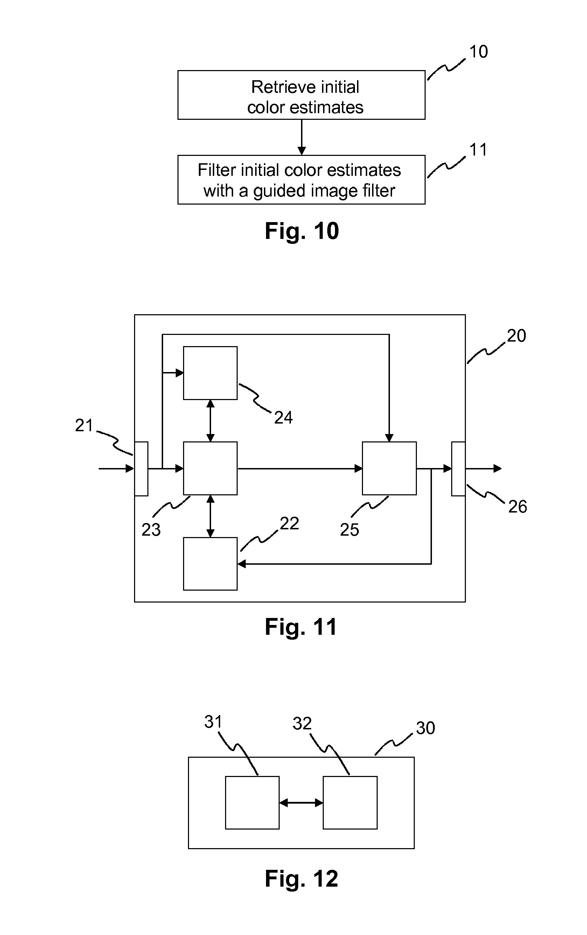

Fig. 10 schematically illustrates one embodiment of a method for color correction in an alpha matting process. In a first step an initial image carrying unmixed colors is retrieved 10, e.g. by analyzing the image or by resorting to a previously generated initial image provided together with the image or available in a storage system or via a network. The initial image is then filtered 11 with a guided image filter using the image as a guiding image.

One embodiment of an apparatus 20 configured to perform the method according to the present principles is schematically depicted in Fig. 11. The apparatus 20 has an input 21 for receiving an image, e.g. from a network or an external storage system. Alternatively, the image is retrieved from a local storage unit 22. A parameter retrieving unit 23 retrieves 10 an initial image carrying unmixed colors. The parameter retrieving unit 23 either retrieves 10 this initial image from a color estimator 24, which analyzes the image, or by resorting to a previously generated initial image provided together with the image via the input 21 or available in the external storage system or the local storage unit 22 or via the network. A guided image filter 25 then filters 11 the initial image using the image as a guiding image. The color correction results are preferably made available via an output 26. They may also be stored on the local storage unit 22. The output 26 may also be combined with the input 21 into a single bidirectional interface. Each of the different units 23, 24, 25 can be embodied as a different processor. Of course, the different units 23, 24, 25 may likewise be fully or partially combined into a single unit or implemented as software running on a processor.

Another embodiment of an apparatus 30 configured to perform a method according to the present principles is schematically illustrated in Fig. 10. The apparatus 30 comprises a processing device 31 and a memory device 32 storing instructions that, when executed, cause the apparatus to perform steps according to one of the described methods.

For example, the processing device 31 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or combination thereof.

The local storage unit 22 and the memory device 32 may include volatile and/or non-volatile memory regions and storage devices such hard disk drives and DVD drives. A part of the memory is a non-transitory program storage device readable by the processing device 31, tangibly embodying a program of instructions executable by the processing device 31 to perform program steps as described herein according to the present principles.

**REFERENCES**

[1] C. Rhemann et al.'s Alpha Matting Benchmark at www.alphamatting.com.

[2] A. Levin et al.: "A Closed-Form Solution to Natural Image Matting", IEEE Transactions on Pattern Analysis and Machine Intelligence, Vol. 30 (2008), pp. 228-242.

[3] Köhler et al.: "Improving Alpha Matting and Motion Blurred Foreground Estimation", Proceedings of the 2013 IEEE International Conference on Image Processing (ICIP), pp. 3446-3450.

[4] European Patent Application 14306979.7 filed on 09 December 2014.

[5] K. He et al.: "Guided Image Filtering", IEEE Transactions on Pattern Analysis and Machine Intelligence, Vol. 35 (2013), pp. 1397-1409.

[6] Hörentrup et al.: "Confidence-aware Guided Image Filter", IEEE International Conference on Image Processing (ICIP) 2014

[7] C. Rhemann et al.: "A Perceptually Motivated Online Benchmark For Image Matting", Proceedings of the 2009 IEEE Conference on Computer Vision and Pattern Recognition (CVPR' 09) (2009), pp. 1826-1833

[8] K. He et al.: "A Global Sampling Method for Alpha Matting", Proceedings of the 2011 IEEE Conference on Computer Vision and Pattern Recognition (CVPR'11) (2011), pp. 2049-2056.

**Claims**

1. A method for color correction in an alpha matting process for an image, the method **comprising:**

   - retrieving (10) an initial image carrying unmixed colors; and
   - filtering (11) the initial image with a guided image filter using the image as a guiding image.

2. The method according to claim 1, **wherein** the initial image carries unmixed foreground colors or unmixed background colors.

3. The method according to claim 1 or 2, **wherein** retrieving (10) the initial image comprises:

   - retrieving a trimap for the image; and
   - computing a filter output only for pixels in the unknown region of the trimap.

4. The method according to one of the preceding claims, **wherein** weights are assigned to pixels of the image and the guided image filter is a confidence-aware guided image filter.

5. The method according to claim 4, **wherein** the weights are estimated alpha values of the pixels.

6. The method according to claim 4, **wherein** the weights are products of estimated alpha values of the pixels and confidences assigned to the estimated alpha values.

7. The method according to one of the preceding claims, **further** comprising splitting the image into separate image channels and processing each channel individually.

8. The method according to one of the preceding claims, **wherein** the guided image filter assumes a color guiding image and established 4D linear models.

9. An apparatus (20) configured to correct colors in an alpha matting process for an image, the apparatus (20) **comprising:**

   - a parameter retrieving unit (23) configured to retrieve (10) an initial image carrying unmixed colors; and
   - a guided image filter (25) configured to filter (11) the initial image using the image as a guiding image.

10. An apparatus (30) configured to correct colors in an alpha matting process for an image, the apparatus (30) comprising a processing device (31) and a memory device (32) having stored therein instructions, which, when executed by the processing device (31), cause the apparatus (30) to:

    - retrieve (10) an initial image carrying unmixed colors; and
    - filter (11) the initial image with a guided image filter using the image as a guiding image.

11. A computer readable storage medium having stored therein instructions enabling color correction in an alpha matting process for an image, which when executed by a computer, cause the computer to:

    - retrieve (10) an initial image carrying unmixed colors; and
    - filter (11) the initial image with a guided image filter using the image as a guiding image.

Fig. 1

Fig. 2

Fig. 3

Fig. 4

a)       b)       c)       d)

**Fig. 5**

a)       b)       c)       d)

**Fig. 6**

a)       b)       c)

**Fig. 7**

a)  b)  c)

**Fig. 8**

**Fig. 9**

10

Retrieve initial
color estimates

11

Filter initial color estimates
with a guided image filter

**Fig. 10**

20

21

24

23

22

25

26

**Fig. 11**

31    32    30

**Fig. 12**

Europäisches
Patentamt

European
Patent Office

Office européen
des brevets

# EUROPEAN SEARCH REPORT

**Application Number**

EP 15 30 5025

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | HORENTRUP ET AL.: "Confidence-aware Guided Image Filter", IEEE INTERNATIONAL CONFERENCE ON IMAGE PROCESSING (ICIP, 2014, XP55192222, | 1-7,9-11 | INV. G06T5/20 G06T5/50 G06T7/00 |
| Y | * abstract * * page 3243, right-hand column, line 16 - page 3246, right-hand column, line 5 * * figure 1 * | 8 | |
| Y,D | A. LEVIN ET AL.: "A Closed-Form Solution to Natural Image Matting", IEEE TRANSACTIONS ON PATTERN ANALYSIS AND MACHINE INTELLIGENCE, vol. 30, 2008, pages 228-242, XP11246442, * abstract * * page 230, right-hand column, line 1 - page 231, right-hand column, line 26 * | 8 | |
| X,D | K. HE ET AL.: "Guided Image Filtering", IEEE TRANSACTIONS ON PATTERN ANALYSIS AND MACHINE INTELLIGENCE, vol. 35, 2013, pages 1397-1409, XP55127406, * abstract * * page 1397, left-hand column, line 1 - page 1398, left-hand column, line 19 * * page 1402, right-hand column, line 37 - page 1403, right-hand column, last line * * page 1407, left-hand column, line 1 - line 17 * | 1,9-11 | |
| A,D | K. HE ET AL.: "A Global Sampling Method for Alpha Matting", PROCEEDINGS OF THE 2011 IEEE CONFERENCE ON COMPUTER VISION AND PATTERN RECOGNITION (CVPR'LL, 2011, pages 2049-2056, XP032037997, * the whole document * | 1-11 | |

**TECHNICAL FIELDS SEARCHED (IPC)**

G06T

The present search report has been drawn up for all claims

| Place of search | Date of completion of the search | Examiner |
|---|---|---|
| Munich | 1 July 2015 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 14306979 A

**Non-patent literature cited in the description**

- **A. LEVIN et al.** A Closed-Form Solution to Natural Image Matting. *IEEE Transactions on Pattern Analysis and Machine Intelligence,* 2008, vol. 30, 228-242
- **KÖHLER et al.** Improving Alpha Matting and Motion Blurred Foreground Estimation. *Proceedings of the 2013 IEEE International Conference on Image Processing,* 2013, 3446-3450
- **K. HE et al.** Guided Image Filtering. *IEEE Transactions on Pattern Analysis and Machine Intelligence,* 2013, vol. 35, 1397-1409
- **HÖRENTRUP et al.** Confidence-aware Guided Image Filter. *IEEE International Conference on Image Processing,* 2014
- **C. RHEMANN et al.** A Perceptually Motivated Online Benchmark For Image Matting. *Proceedings of the 2009 IEEE Conference on Computer Vision and Pattern Recognition,* 2009, 1826-1833
- **K. HE et al.** A Global Sampling Method for Alpha Matting. *Proceedings of the 2011 IEEE Conference on Computer Vision and Pattern Recognition,* 2011, 2049-2056